# DEMANDE DE BREVET EUROPEEN

(11) **EP 4 717 598 A1**
(43) Date de publication de la demande: **01.04.2026**
(21) Numéro de dépôt: 24202447.9
(22) Date de dépôt: 25.09.2024
(51) Int. Cl.: B64D 11/06, B60N 3/00

(54) **TABLETTE REPAS AYANT UNE FONCTION DE TABLETTE À COCKTAIL**

(71) Demandeur: Safran Seats, 78370 Plaisir (FR); Safran Seats GB Limited, Cwmbran NP44 3HQ (GB)
(72) Inventeur: COTTA, Gérald, 77550 Moissy-Cramayel (FR); WOODINGTON, James, 77550 Moissy-Cramayel (FR); GLAIN, Arthur K., 77550 Moissy-Cramayel (FR)
(74) Mandataire: Marconnet, Sébastien

(57) **Abrégé**

L'invention porte sur une unité de siège (10) comportant:
- un siège (11),
- un meuble de siège (19) situé à proximité du siège (11),
- une tablette repas (28) mobile par rapport au meuble de siège (19) entre une position stockée et une position déployée,
- la tablette repas (28) s'étendant dans un plan horizontal dans la position stockée et dans la position déployée, ladite tablette repas (28) comporte au moins une portion plane (28.2) visible et accessible par le passager lorsque la tablette repas (28) est en position stockée de façon à avoir une fonction de tablette à cocktail et une fonction de poignée manipulable par le passager pour faire passer la tablette repas (28) de la position stockée à la position déployée.

## Description

La présente invention porte sur une tablette repas ayant une fonction de tablette à cocktail. L'invention trouve une application particulièrement avantageuse dans le domaine de l'aéronautique, en particulier avec les consoles de sièges installés dans des cabines d'avion de type première classe ou classe affaires.

De façon connue en soi, une unité de siège de cabine d'avion comporte un siège associé à une coque d'intimité s'étendant au moins en partie autour du siège. Cela permet de garantir l'intimité du passager en créant un espace partiellement clos autour de l'unité de siège pour isoler le passager de l'environnement extérieur.

Le siège comporte au moins une assise et au moins un dossier monté sur un châssis muni d'attaches destinées à assurer une fixation du siège sur des rails d'une cabine d'avion. Le siège peut être transformable en couchette au moyen d'une cinématique lui permettant d'être mobile entre une position "assise", dans laquelle le siège est configuré pour définir une position assise d'un passager, et une position "lit", dans laquelle le siège est configuré pour définir un plan de couchage du passager sensiblement horizontal. Alternativement, afin de créer une surface de lit pour le passager, il est possible de prévoir un siège comportant une assise fixe et un dossier fixe associés à une extension de lit amovible destinée à combler un espace entre l'assise du siège et un ottoman situé devant le siège. Une telle configuration présente un intérêt économique du fait de la suppression des différents actionneurs classiquement intégrés sur le siège.

L'unité de siège peut également comporter une console latérale s'étendant suivant un côté du siège. La console latérale peut comporter une surface de table sur laquelle un passager peut poser des objets personnels ou son plateau repas notamment. Un espace de stockage vertical peut être disposé au-dessus de la console latérale. Cet espace de stockage vertical comprend un ou plusieurs éléments parmi une pochette littérature, un porte-bouteille, ou un minibar. Le choix des rangements est configurable en fonction du souhait de la compagnie aérienne.

Généralement, la console comporte une tablette repas mobile entre une position stockée dans laquelle la tablette repas est disposée à l'intérieur d'un logement de tablette repas réalisé dans la console et une position déployée dans laquelle la tablette repas s'étend à l'extérieur du logement de tablette repas et en face du passager.

La tablette repas est généralement insérée complètement à l'intérieur du logement de tablette, ce qui nécessite de prévoir une poignée actionnable par un passager ainsi qu'un panneau de signalement au passager indiquant la présence d'une tablette repas amovible. Par ailleurs, une tablette à cocktail ayant une surface inférieure à la tablette repas peut être disponible pour permettre au passager de poser un verre lorsque la tablette repas est en position stockée. Une telle configuration impose de prévoir un composant (la tablette à cocktail) en plus de la tablette repas.

L'invention vise à remédier efficacement aux inconvénients précités en proposant une unité de siège comportant:
- un siège,
- un meuble de siège situé à proximité du siège,
- une tablette repas mobile par rapport au meuble de siège entre une position stockée et une position déployée,
- la tablette repas s'étendant dans un plan horizontal dans la position stockée et dans la position déployée, ladite tablette repas comporte au moins une portion plane visible et accessible par le passager lorsque la tablette repas est en position stockée de façon à avoir une fonction de tablette à cocktail et une fonction de poignée manipulable par le passager pour faire passer la tablette repas de la position stockée à la position déployée.

L'invention permet ainsi, en combinant les fonctions de tablette repas et de tablette à cocktail, de faire l'économie de la tablette à cocktail et donc de réduire la masse de l'ensemble pour limiter les émissions de gaz à effet de serre. Du fait de l'accessibilité d'une portion de la tablette repas pour la faire passer en position déployée, l'invention permet également la suppression de la poignée et du panneau indicateur de tablette repas. L'invention permet en outre de simplifier le mouvement de la tablette repas pour passer d'une position à une autre.

Selon une réalisation de l'invention, ledit meuble de siège comporte un logement de tablette repas, ladite tablette repas comportant une première portion plane destinée à être stockée à l'intérieur du logement de tablette repas lorsque la tablette repas se trouve dans la position stockée, et une deuxième portion plane destinée à être disposée à l'extérieur du logement de tablette repas lorsque la tablette repas se trouve en position stockée de façon à rester visible et accessible par le passager pouvant s'en servir comme une tablette à cocktail.

Selon une réalisation de l'invention, le meuble de siège est une console latérale disposée suivant un côté du siège.

Selon une réalisation de l'invention, ladite console comportant une paroi supérieure de table fixe sur laquelle le passager peut poser des objets, le logement de tablette repas est disposé sous la paroi supérieure de table fixe de la console latérale.

Selon une réalisation de l'invention, la paroi supérieure de table fixe comporte une échancrure permettant de rendre visible et accessible la deuxième portion plane de la tablette repas lorsque ladite tablette repas est dans une position stockée.

Selon une réalisation de l'invention, la tablette repas est mobile en translation entre la position stockée et la position déployée suivant une direction perpendiculaire à un axe du siège.

Selon une réalisation de l'invention, la deuxième portion plane s'étend en saillie par rapport à une face d'une coque d'intimité portant un écran vidéo.

Selon une réalisation de l'invention, la tablette repas est mobile en translation entre la position stockée et la position déployée suivant une direction parallèle ou confondu par rapport à un axe du siège.

Selon une réalisation de l'invention, le meuble de siège est une console latérale disposée suivant un côté du siège et dépourvue de logement de tablette repas, de sorte que la tablette repas est visible et accessible au passager dans la position stockée et dans la position déployée, ladite tablette repas comportant une portion s'étendant en saillie par rapport à une face latérale de la console latérale tournée vers le passager suivant une largeur suffisante pour que le passager puisse y poser un verre.

Selon une réalisation de l'invention, la tablette repas est mobile en translation entre la position stockée et la position déployée suivant une direction perpendiculaire à un axe du siège.

Selon une réalisation de l'invention, ladite unité de siège comporte un système de translation linéaire permettant un déplacement en translation de la tablette repas de la position stockée vers la position déployée et inversement.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:

[Fig. 1 a] [Fig. 1b] Les figures 1a et 1b sont des vues en perspective et de dessus d'une unité de siège équipée d'une tablette repas en position stockée suivant un premier mode de réalisation de l'invention;

[Fig. 2a] [Fig. 2b] Les figures 2a et 2b sont des vues en perspective et de dessus d'une unité de siège équipée d'une tablette repas en position déployée suivant le premier mode de réalisation de l'invention;

[Fig. 3a] [Fig. 3b] Les figures 3a et 3b sont des vues en perspective de dessous d'un système de translation linéaire permettant de faire passer la tablette repas selon l'invention d'une position stockée à une position déployée et inversement;

[Fig. 4a] [Fig. 4b] Les figures 4a et 4b sont des vues en perspective illustrant un deuxième mode de réalisation d'une tablette repas selon l'invention respectivement en position stockée et en position déployée;

[Fig. 5a] [Fig. 5b] Les figures 5a et 5b sont des vues en perspective illustrant un troisième mode de réalisation d'une tablette repas selon l'invention respectivement en position stockée et en position déployée.

Il est à noter que les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Dans la suite de la description, les termes relatifs du type "horizontal", "vertical", "avant", "arrière", "droit" ou "gauche" sont entendus par référence au sens commun que leur donnerait une personne observant un siège selon l'invention installé à l'intérieur d'une cabine d'avion et se trouvant en position assise sur ledit siège.

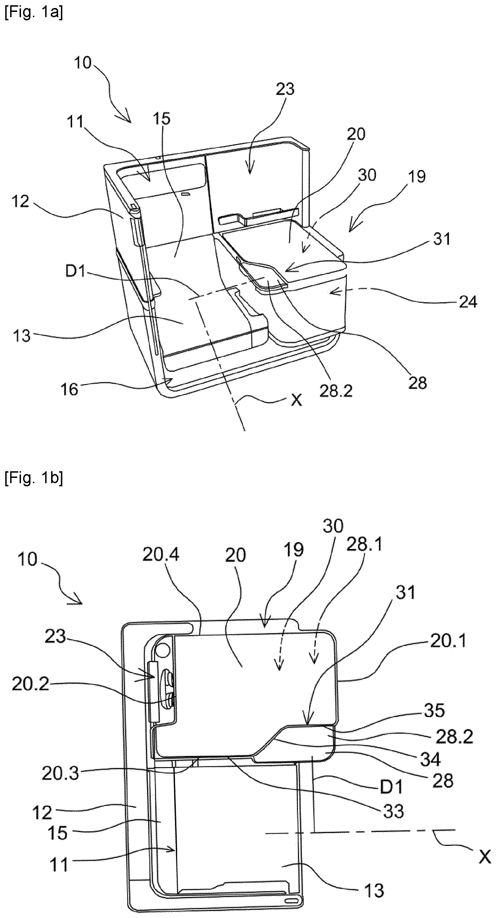

Les figures 1a, 1b, 2a, 2b, 4a et 4b montrent une unité de siège 10 de cabine d'avion comportant un siège 11 associé à une coque d'intimité 12 s'étendant au moins en partie autour du siège 11. Cela permet de garantir l'intimité du passager en créant un espace partiellement clos autour de l'unité de siège 10 pour isoler le passager de l'environnement extérieur.

Le siège 11 comporte au moins une assise 13 et au moins un dossier 15 montés sur un châssis 16 muni d'attaches destinées à assurer une fixation du siège 11 sur des rails d'une cabine d'avion. Le siège 11 présente un axe X correspondant à l'intersection entre un plan vertical médian du siège 11, notamment un plan de symétrie, et un plan horizontal. Le siège 11 peut être transformable en couchette au moyen d'une cinématique lui permettant d'être mobile entre une position "assise", dans laquelle le siège 11 est configuré pour définir une position assise d'un passager, et une position "lit", dans laquelle le siège 11 est configuré pour définir un plan de couchage du passager sensiblement horizontal. Alternativement, afin de créer une surface de lit pour le passager, il est possible de prévoir un siège 11 comportant une assise 13 fixe et un dossier 15 fixe associés à une extension de lit amovible destinée à combler un espace entre l'assise 13 et un ottoman situé devant le siège 11. Une telle configuration présente un intérêt économique du fait de la suppression des différents actionneurs classiquement intégrés sur le siège 11.

L'unité de siège 10 peut également comporter une console latérale 19 s'étendant suivant un côté du siège 11. La console latérale 19 peut comporter une paroi supérieure de table 20 formant une surface de table sur laquelle un passager peut poser des objets personnels ou son plateau repas notamment. Un espace de stockage vertical 23 peut être disposé au-dessus de la console latérale 19. Cet espace de stockage vertical 23 comprend un ou plusieurs éléments parmi une pochette littérature, un porte-bouteille, ou un minibar. Le choix des rangements est configurable en fonction du souhait de la compagnie aérienne.

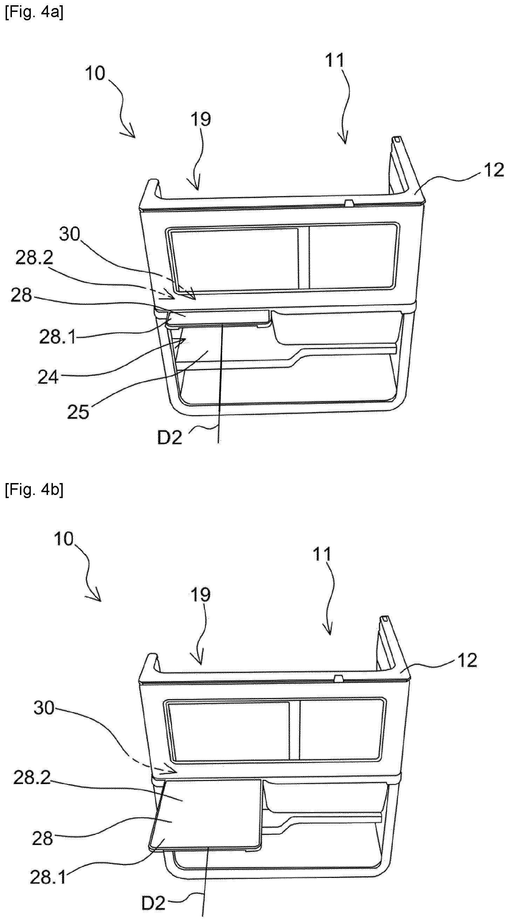

Comme cela est visible sur la figure 4a, la console latérale 19 peut comporter un logement 24 ouvert en direction du siège arrière dans lequel est disposé un repose-pieds ou ottoman 25. Ainsi un passager arrière peut poser ses pieds sur le repose-pieds 25 lorsque son siège 11 se trouve en position lit.

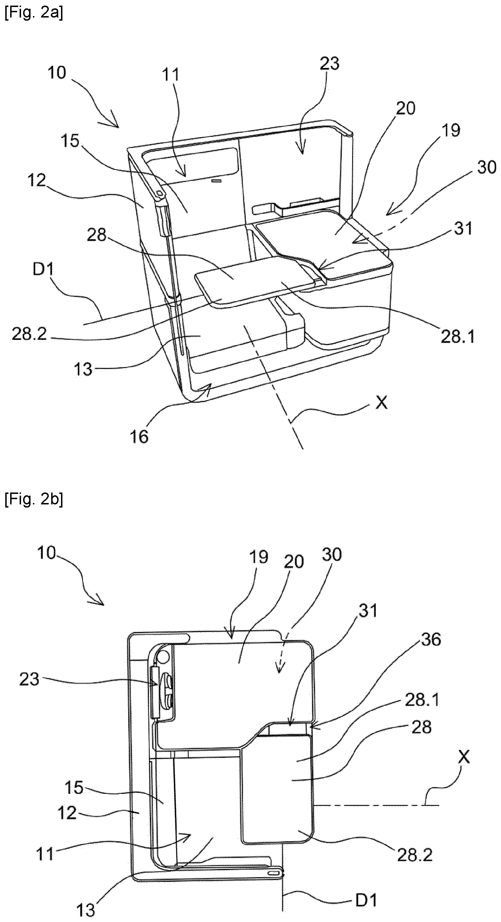

Dans le mode de réalisation des figures 1a, 1b, 2a et 2b, une tablette repas 28 est mobile par rapport à la console latérale 19 entre une position stockée montrée sur les figures 1a et 1b et une position déployée montrée sur les figures 2a et 2b. La tablette repas 28 s'étend dans un plan horizontal dans la position stockée et dans la position déployée.

Avantageusement, la tablette repas 28 présente la forme d'une plaque plane en forme de panneau unique de faible épaisseur. La tablette repas 28 comporte une structure monobloc réalisée dans un matériau rigide. La tablette repas 28 peut être recouverte d'une couche de finition. Le matériau rigide peut être un matériau thermoplastique, thermodurcissable, un matériau métallique, notamment de l'aluminium, un matériau composite ou tout autre type de matériau adapté à l'application. La tablette repas 28 présente une forme rectangulaire mais pourrait en variante présenter une forme carrée, ronde, ovale, ou toute autre forme adaptée à l'application.

La tablette repas 28 comporte une première portion plane 28.1 et une deuxième portion plane 28.2 d'un seul tenant avec la première portion plane 28.1. Autrement dit, la première portion plane 28.1 et la deuxième portion plane 28.2 ne sont pas articulées l'une par rapport à l'autre au contraire des tablettes à double panneaux.

La console latérale 19 comporte une paroi supérieure de table fixe 20 sur laquelle le passager peut poser des objets. Un logement de tablette repas 30 est disposé sous la paroi supérieure de table fixe 20 de la console latérale 19. La paroi supérieure de table fixe 20 comporte une échancrure 31 permettant de rendre visible et accessible la deuxième portion plane 28.2 de la tablette repas 28 lorsque ladite tablette repas 28 est dans une position stockée.

Comme cela est illustré sur la figure 1b, la paroi supérieure de table fixe 20 comporte un bord avant 20.1 et un bord arrière 20.2 opposés l'un par rapport à l'autre. La paroi supérieure de table fixe 20 comporte un bord latéral droit 20.3 et un bord latéral gauche 20.4 opposés l'un par rapport à l'autre. Le bord latéral droit 20.3 situé du côté du passager comporte une première portion rectiligne 33 prolongée par une rampe 34 laquelle est prolongée par une deuxième portion rectiligne 35 en retrait par rapport à la première portion rectiligne 33. La rampe 34 et la deuxième portion rectiligne 35 délimitent l'échancrure 31 de la paroi supérieure de table fixe 20.

Comme cela est illustré sur les figures 1a et 1b, lorsque la tablette repas 28 se trouve dans la position stockée, la première portion plane 28.1 est stockée à l'intérieur du logement de tablette repas 30 et la deuxième portion plane 28.2 est disposée à l'extérieur du logement de tablette repas 30 de façon à rester visible et accessible par le passager pouvant s'en servir comme une tablette à cocktail. L'accès à la deuxième portion plane 28.2 est rendue possible grâce à la présence de l'échancrure 31 réalisée dans la paroi supérieure de table fixe 20. La deuxième portion plane 28.2 de la tablette 28 a ainsi une fonction de tablette à cocktail. A cette fin, la deuxième portion plane 28.2 présente une largeur suffisante, notamment supérieure à 5cm, pour que le passager puisse poser un verre sur la deuxième portion plane 28.2 lorsque la tablette 28 est en position stockée.

La deuxième portion 28.2 a également une fonction de poignée manipulable par le passager pour faire passer la tablette repas 28 de la position stockée à la position déployée. En effet, le passager peut saisir la deuxième portion 28.2 et tirer latéralement la tablette repas 28 en l'éloignant de la console latérale 19 de façon à déplacer la tablette repas 28 en translation suivant une direction D1 perpendiculaire à l'axe X du siège 11.

Afin de faciliter la préhension de la deuxième portion 28.2 par le passager, la deuxième portion 28.2 peut s'étendre légèrement en saillie de quelques centimètres par rapport à une face latérale de la console latérale 19.

Comme cela est illustré sur les figures 2a et 2b, lorsque la tablette repas 28 est en position déployée, la première portion plane 28.1 et la deuxième portion plane 28.2 se situent à l'extérieur du logement de tablette repas 30. Les deux portions planes 28.1, 28.2 se situent devant le passager de façon à maximiser la surface de la tablette repas 28 sur laquelle le passager peut poser des objets, notamment un dispositif électronique portable ou un plateau repas.

Suivant un mouvement de translation inverse en direction du logement de tablette repas 30, le passager peut faire repasser la tablette repas 28 en position stockée.

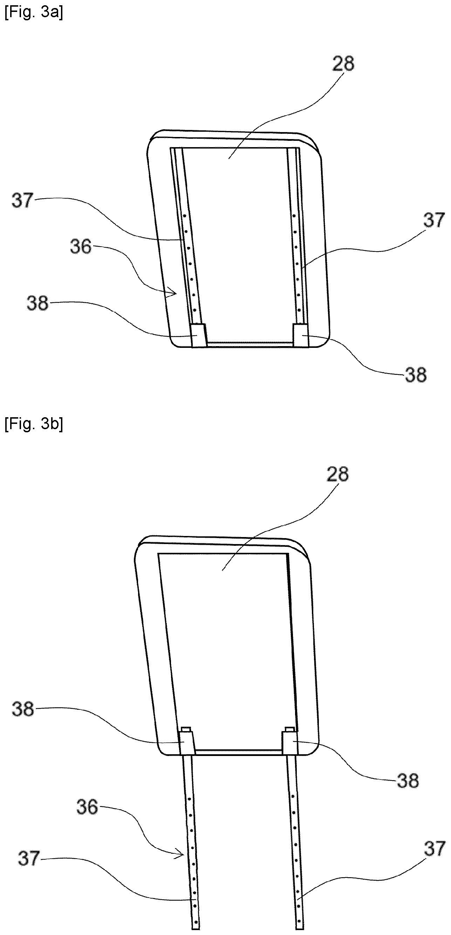

Afin d'assurer le déplacement en translation de la tablette repas 28 d'une position à une autre, l'unité de siège comporte un système de translation linéaire 36 permettant un déplacement en translation de la tablette repas 28 d'une position à une autre, tel que montré sur les figures 3a et 3b. Dans l'exemple représenté, le système de translation linéaire 36 comporte des rails 37 montés à l'intérieur du logement de tablette repas 30 et des supports 38 fixés sur la tablette repas 28 et aptes à coulisser le long des rails 37. Une telle configuration permet de faire passer la tablette repas 28 de la position stockée (cf. figure 3a) à la position déployée (cf. figure 3b) et inversement. Les supports 38 peuvent être par exemple à galets ou à billes. En variante, il est possible d'utiliser un système de translation linéaire 36 à double bielles ou tout autre système de translation linéaire adapté à l'application.

Le mode de réalisation des figures 4a et 4b est analogue à celui des figures 1a, 1b, 2a et 2b sauf que la tablette repas 28 est disposée sous l'écran vidéo 40 fixé sur la coque d'intimité 12 en face du passager.

Lorsque la tablette repas 28 est en position stockée, la première portion plane 28.1 est stockée à l'intérieur du logement de tablette repas 30 et la deuxième portion plane 28.2 est disposée à l'extérieur du logement de tablette repas 30 de façon à rester visible et accessible par le passager pouvant s'en servir comme une tablette à cocktail. La deuxième portion plane 28.2 s'étend en saillie par rapport à une face de la coque d'intimité 12 portant l'écran vidéo 40, tel que montré sur la figure 4a.

La deuxième portion plane 28.2 de la tablette 28 a ainsi une fonction de tablette à cocktail. A cette fin, la deuxième portion plane 28.2 présente une largeur suffisante, notamment supérieure à 5cm, pour que le passager puisse poser un verre sur la deuxième portion plane 28.2 lorsque la tablette 28 est en position stockée.

La deuxième portion 28.2 a également une fonction de poignée manipulable par le passager pour faire passer la tablette repas 28 de la position stockée à la position déployée. En effet, le passager peut saisir la deuxième portion 28.2 et tirer vers lui la tablette repas 28 dans une direction opposée à l'écran vidéo 40 de façon déplacer la tablette repas 28 en translation suivant une direction D2 parallèle ou confondu par rapport à l'axe X du siège 11.

Comme cela est illustré sur la figure 4b, lorsque la tablette repas 28 est en position déployée, la première portion plane 28.1 et la deuxième portion plane 28.2 se situent à l'extérieur du logement de tablette repas 30. Les deux portions planes 28.1, 28.2 se situent devant le passager de façon à maximiser la surface de la tablette repas 28 sur laquelle le passager peut poser des objets, notamment un dispositif électronique portable ou un plateau repas.

Suivant un mouvement de translation inverse en direction du logement de tablette repas 30, le passager peut faire repasser la tablette repas 28 en position stockée.

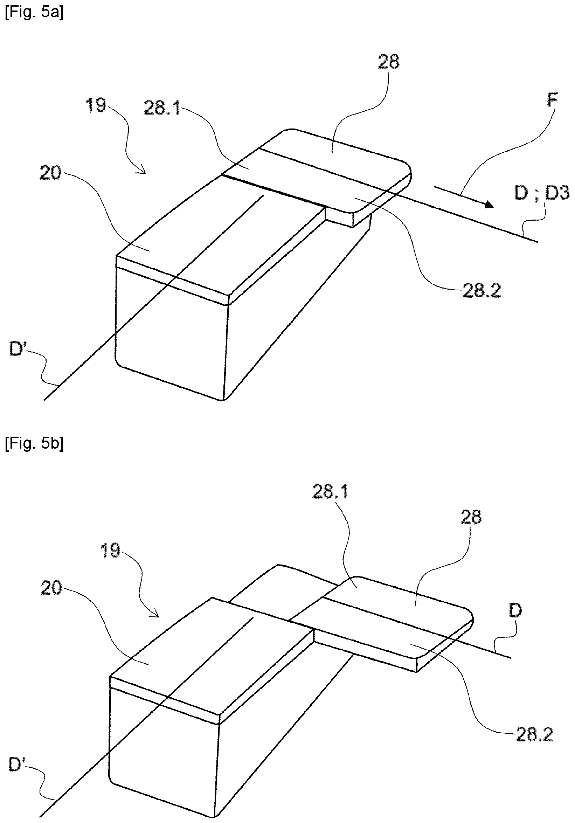

Dans le mode de réalisation des figures 5a et 5b, la console latérale 19 est dépourvue de logement de tablette repas 30 de sorte que la tablette repas 28 est visible et accessible au passager dans la position stockée et dans la position déployée. Autrement dit, la tablette repas 28 comporte une première portion plane 28.1 et une deuxième portion plane 28.2 visible et accessible au passager que la tablette repas 28 soit en position stockée ou en position déployée.

Lorsque la tablette repas 28 est en position stockée, la deuxième portion plane 28.2 s'étend en saillie par rapport à une face latérale de la console latérale 19 tournée vers le passager suivant une largeur suffisante pour que le passager puisse y poser un verre, tel que montré sur la figure 5a.

La tablette repas 28 se situe dans un même plan qu'une paroi supérieure de table fixe 20 de la console 19. La tablette repas 28 de même épaisseur que la paroi supérieure de table fixe 20 se situe dans un prolongement et dans l'épaisseur de ladite paroi supérieure de table fixe 20 afin d'augmenter la surface de la paroi supérieure de table fixe 20. Une direction d'extension longitudinale D de la tablette 28 peut être perpendiculaire à une direction d'extension longitudinale D' de la paroi supérieure de table fixe 20.

La deuxième portion 28.2 a également une fonction de poignée manipulable par le passager pour faire passer la tablette repas 28 de la position stockée à la position déployée. En effet, le passager peut saisir la deuxième portion saillante 28.2 et tirer la tablette repas 28 suivant la flèche F dans une direction opposée à la console latérale 19 de façon à déplacer la tablette repas 28 en translation suivant une direction D3 perpendiculaire par rapport à l'axe X du siège 11.

Comme cela est illustré sur la figure 5b, lorsque la tablette repas 28 est en position déployée, la première portion plane 28.1 et la deuxième portion plane 28.2 s'étendent en saillie par rapport à la face latérale de la console latérale 19. Les deux portions planes 28.1, 28.2 se situent devant le passager de façon à faciliter leur accès pour poser des objets, notamment un dispositif électronique portable ou un plateau repas.

Suivant un mouvement de translation inverse en direction de la console latérale 19, le passager peut faire repasser la tablette repas 28 en position stockée.

En variante, la tablette repas 28 peut être intégré dans un meuble de siège situé à proximité du siège 11 autre que la console latérale 19, tel qu'un placard, un ottoman, une étagère, ou tout autre meuble pouvant être disposé à proximité du siège 11.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Unité de siège (10) comportant:
- un siège (11),
- un meuble de siège (19) situé à proximité du siège (11),
- une tablette repas (28) mobile par rapport au meuble de siège (19) entre une position stockée et une position déployée,
**caractérisée en ce que** la tablette repas (28) s'étendant dans un plan horizontal dans la position stockée et dans la position déployée, ladite tablette repas (28) comporte au moins une portion plane (28.2) visible et accessible par le passager lorsque la tablette repas (28) est en position stockée de façon à avoir une fonction de tablette à cocktail et une fonction de poignée manipulable par le passager pour faire passer la tablette repas (28) de la position stockée à la position déployée.

2. Unité de siège selon la revendication 1, **caractérisée en ce que** ledit meuble de siège (19) comporte un logement de tablette repas (30), ladite tablette repas (28) comportant une première portion plane (28.1) destinée à être stockée à l'intérieur du logement de tablette repas (30) lorsque la tablette repas (28) se trouve dans la position stockée, et une deuxième portion plane (28.2) destinée à être disposée à l'extérieur du logement de tablette repas (30) lorsque la tablette repas (28) se trouve en position stockée de façon à rester visible et accessible par le passager pouvant s'en servir comme une tablette à cocktail.

3. Unité de siège selon la revendication 2, **caractérisée en ce que** le meuble de siège (19) est une console latérale (19) disposée suivant un côté du siège (11).

4. Unité de siège selon la revendication 3, **caractérisée en ce que** ladite console comportant une paroi supérieure de table fixe (20) sur laquelle le passager peut poser des objets, le logement de tablette repas (30) est disposé sous la paroi supérieure de table fixe (20) de la console latérale (19).

5. Unité de siège selon la revendication 4, **caractérisée en ce que** la paroi supérieure de table fixe (20) comporte une échancrure (31) permettant de rendre visible et accessible la deuxième portion plane (28.2) de la tablette repas (28) lorsque ladite tablette repas (28) est dans une position stockée.

6. Unité de siège selon la revendication 2, **caractérisée en ce que** la deuxième portion plane (28.2) s'étend en saillie par rapport à une face d'une coque d'intimité (12) portant un écran vidéo (40).

7. Unité de siège selon la revendication 6, **caractérisée en ce que** la tablette repas (28) est mobile en translation entre la position stockée et la position déployée suivant une direction (D2) parallèle ou confondu par rapport à un axe (X) du siège (11).

8. Unité de siège selon la revendication 1, **caractérisée en ce que** le meuble de siège (19) est une console latérale disposée suivant un côté du siège (11) et dépourvue de logement de tablette repas (30), de sorte que la tablette repas (28) est visible et accessible au passager dans la position stockée et dans la position déployée, ladite tablette repas (28) comportant une portion (28.2) s'étendant en saillie par rapport à une face latérale de la console latérale (19) tournée vers le passager suivant une largeur suffisante pour que le passager puisse y poser un verre.

9. Unité de siège selon la revendication 8, **caractérisée en ce que** la tablette repas (28) est mobile en translation entre la position stockée et la position déployée suivant une direction (D3) perpendiculaire à un axe du siège (11).

10. Unité de siège selon l'une quelconque des revendications 1 à 9, **caractérisée en ce qu'**elle comporte un système de translation linéaire (36) permettant un déplacement en translation de la tablette repas (28) de la position stockée vers la position déployée et inversement.
